Europäisches Patentamt

European Patent Office

Office européen des brevets

(11) Veröffentlichungsnummer: **0 145 882**
**A2**

## (12) EUROPÄISCHE PATENTANMELDUNG

(21) Anmeldenummer: 84112349.0

(22) Anmeldetag: 13.10.84

(51) Int. Cl.⁴: **G 01 B 7/30**

(30) Priorität: 17.12.83 DE 3345791

(43) Veröffentlichungstag der Anmeldung: 26.06.85
Patentblatt 85/26

(84) Benannte Vertragsstaaten: **DE FR GB SE**

(71) Anmelder: **VDO Adolf Schindling AG, Gräfstrasse 103,
D-6000 Frankfurt/Main (DE)**

(72) Erfinder: **Wallrafen, Werner, Dipl.-Ing., Birnheck 11,
D-6233 Kelkheim/Ruppertshain (DE)**

(74) Vertreter: **Könekamp, Herbert, Dipl.-Ing., Sodener
Strasse 9, D-6231 Schwalbach (DE)**

(54) **Berührungsloser elektronischer Winkelgeber.**

(57) Bei einem berührungslosen elektronischen Winkelgeber, mit einem drehbaren Magneten (5) sind zur Erfassung der Winkelstellung rechtwinklig zueinander angeordnete Sensorspulen (11, 12) auf einem für alle Sensorspulen gemeinsamen Ringkern (9) eines nach dem Fluxgate-Prinzip gebildeten Magnetfelddetektors vorgesehen. Vorzugsweise ist der Winkelgeber mit dem drehbaren Magneten und dem Ringkern mit den Sensorspulen in einem gegenüber dem Erdfeld abschirmenden Gehäuse (1) untergebracht. In diesem ist wiederum der Innenraum (2), in dem sich der Magnet drehen kann, von einem Innenraum (3) hermetisch abgetrennt, in dem der Ringkern (9) mit den Sensorspulen und die Elektronik (15–19) angeordnet sind.

ACTORUM AG

EP 0 145 882 A2

— 1 —

VDO Adolf Schindling AG  - 1 -        6000 Frankfurt/Main
                                      Gräfstraße 103
                                      G-R Kl-hu / E 1965
                                      14. Dez. 1983

Berührungsloser elektronischer Winkelgeber

Die Erfindung betrifft einen berührungslosen elektronischen
Winkelgeber nach dem Oberbegriff des Anspruchs 1.

Derartige  Winkelgeber werden zur Fernmeldung der Stellung
eines mechanischen Stellglieds vorgesehen, um die Winkelstellung durch elektrische Signale zu übertragen, zu verarbeiten, anzuzeigen und/oder zu Steuerungen und Regelungen
heranzuziehen. Derartige bekannte Winkelgeber sind vorzugsweise berührungslos ausgebildet, d.h. ein entsprechend dem
Stellglied gedrehtes Element steht nicht unmittelbar mit
den Sensorelementen in Verbindung, um grundsätzliche
Nachteile wie Verschleiß durch Reibung und ungenaue Einstellung des drehbaren Elements zu vermeiden.

Hierzu gehört es insbesondere bei einer Windmessanlage zum
Stand der Technik, eine Windfahne mechanisch mit einem
ferromagnetischen Ringmagneten zu kuppeln, der im Einflußbereich zweier rechtwinklig zueinander angeordneter Hall-
Elemente drehbar ist. Infolge der verhältnismäßig geringen
Empfindlichkeit der Hall-Elemente bezogen auf das nutzbare
variable Magnetfeld muß dabei der drehbare Magnet in unmittelbarer Nähe der Hall-Elemente drehbar sein.

Es ist auch störend, daß die Ausgangssignale der Hall-Elemente verhältnismäßig stark beispielsweise unter Temperatureinfluß driften. Daraus resultiert das Erfordernis einer hohen nutzbaren Flußkonzentration, die durch den Drehmagneten im Bereich der Hall-Elemente zu bewirken ist. Abgesehen davon ist ein Winkelgeber mit Hall-Elementen aus verschiedenen Gründen recht aufwendig herzustellen: Der wegen der hohen Flußkonzentration benötigte dauermagnetische Ringmagnet ist relativ teuer. Hinzu kommen Fertigungskosten beispielsweise durch eine genaue Ausrichtung der beiden Hall-Elemente in einem rechten Winkel zueinander, die auf Dauer einzuhalten ist.

Zum Stand der Technik gehören ferner sogenannte Synchros, von denen je einer auf der Geberseite und einer auf der Empfängerseite vorzusehen ist. Die Synchros weisen in einem Stator drei um 120° gegeneinander versetzte Spulen auf, die durch Wechselfelder entsprechend der Stellung eines Rotors erregt werden. Die Synchros auf der Geberseite und auf der Empfängerseite sind durch dreiadrige Leitungen (elektrische Welle) miteinander verbunden und wirken derart, daß ein Rotor auf der Empfängerseite dem Rotor auf der Geberseite nachläuft. - Mit diesen Synchros werden zwar einige Nachteile der oben erörterten Hall-Elemente vermieden, jedoch ist der Herstellaufwand eher noch größer, insbesondere wegen des auf der Empfängerseite vorzusehenden Synchros, der nicht ohne weiteres durch eine Auswertelektronik ersetzt werden kann. Derartige Winkelgeber sind daher oft nur dann sinnvoll, wenn auf der Empfängerseite größere Drehmomente erzeugt werden sollen.

Der vorliegenden Erfindung liegt daher die Aufgabe zugrunde, einen berührungslosen elektronischen Winkelgeber zu schaffen, der in der Serienfertigung günstig zu montieren ist, der sich durch eine große Zuverlässigkeit und Unempfindlichkeit gegen Temperatur-und Feucht -Einflüsse auszeichnet und hinsichtlich der Anordnung des drehbaren Magneten zu den Sensorelementen unkritisch ist.

Diese Aufgabe wird durch die in dem kennzeichnenden Teil des Anspruchs 1 angegebene Erfindung gelöst.

Die Erfindung beruht auf dem Prinzip, daß die Stellung des drehbaren Magneten durch Auswertung der in zwei senkrecht zueinander angeordneten Sensorspulen induzierten Signalspannungen festgestellt wird, wobei die Sensorspulen, der Ringkern und die an die Sensorspulen angeschlossene elektronische Einrichtung zur Auswertung der Signalspannungen nach dem an sich bekannten Flux-Gate Prinzip ausgebildet sind. Solche Flux-Gate Anordnungen hat man bisher aber nur zur Detektion der Erdmagnetfeldrichtung eingesetzt, wozu die Flux-Gate Anordnung entsprechend empfindlich dimensioniert war (Hisatsugu Itoh "Magnetic Field Sensor and Its application to Automobiles" in SAE/SP-80/458/S0250 der Society of Automotive Engineers). Dieses Flux-Gate kann in folgendem Rahmen zu der Ausführung der vorliegenden Erfindung herangezogen werden:

Auf einem Ringkern aus Ferrit sind eine Erregerwicklung und - rechtwinklig zueinander versetzt - zwei Sensorspulen angeordnet. Insbesondere sind die Sensorspulen so auf den Ringkern gewickelt, daß die Harmonischen ungerader Ordnung der in den Sensorspulen induzierten Signalspannungen unterdrückt werden. Ausgewertet wird meistens die zweite Harmonische der Signalspannung, indem diese ausgefiltert, verstärkt und nach phasenrichtiger Detektion sowie weiterer Verstärkung der so gewonnenen Gleichspannung ein Spannungssignal darstellt, welches proportional dem Kosinus des Einfallwinkels der magnetischen Hauptfeldrichtung zu einer in einer Ebene des Ringkerns liegenden Achse ist. Die in gleicher Weise verarbeitete Spannung, die in der zweiten Sensorspule rechtwinklig zu der ersten Sensorspule induziert wird, enthält eine zweite Harmonische, die dem Sinus des genannten Einfallswinkels weitgehend proportional ist. Die phasenrichtige Detektion erfolgt also in beiden Fällen mit der doppelten Erregerfrequenz. Zur Linearisierung der Anordnung kann ferner eine Rückführung der gleichgerichteten, aus der zweiten Harmonischen abgeleiteten Spannung in die Sensorspule vorgesehen sein, so daß der durch das äußere Magnetfeld in dem Ringkern erzeugte Fluß kompensiert wird. - Die weitere Auswertung der beiden aus den zweiten Harmonischen abgeleiteten Spannungen entsprechend dem Kosinus und dem Sinus des Magnetfeldeinfallwinkels kann mit einem Quotientenmeßwerk zur Anzeige einer entsprechenden Größe erfolgen oder aber mit einem elektronischen Komperator und Logikschaltkreisen zur selektiven Aktivierung von Segmenten einer LED-Anzeige oder einer Flüssigkristallanzeige.

0145882

Dieses Flux-Gate Prinzip ist aber im Rahmen der vorliegenden Erfindung so abgewandelt, daß nicht das Erdmagnetfeld ausgewertet wird, sondern die Winkelstellung des entsprechend einem mechanischen Stellglied drehbaren Magneten. Hierzu sind insbesondere Maßnahmen getroffen, um den Einfluß des Erdmagnetfeldes auf den Ringmagneten mit den Sensorspulen auszuschalten. Dies erfolgt entweder durch eine besonders geeignete Abschirmung, die weiter unten angegeben wird, oder durch Konzentration des von dem Drehmagneten erzeugten Magnetfelds im Verhältnis zu dem hier störenden Erdmagnetfeld. Zu letztgenanntem Zweck ist aber ein wesentlich größerer Abstand des Drehmagneten zu dem Ringkern mit den Sensorelementen zulässig als in dem Falle der bekannten Verwendung von Hall-Elementen.

Das Flux-Gate Prinzip in der vorliegenden Anwendung zur Meldung der Winkelstellung eines mechanischen Stellglieds hat u.a. den Vorteil , daß die Gestaltung des drehbaren Magneten unkritisch ist. Insbesondere braucht der drehbare Magnet nicht als relativ aufwendiger Dauermagnet in Ringform ausgebildet zu sein. Die Anordnung der Sensorspulen in einem rechten Winkel zueinander auf dem Ringkern aus einem ferromagnetischen Material mit der für die Spannungsinduktion nach dem Flux-Gate Prinzip erforderlichen Kennlinie ist hingegen mit der Anordnung der Hall-Elemente zueinander zu vergleichen: Da die Sensorspulen auf ihrem gemeinsamen Ringkern beim Bewickeln festgelegt werden, kann dieser Kern in anschließenden Fertigungsabschnitten des Winkelgebers unproblematisch gehandhabt werden, wodurch die Fertigungskosten weiter abgesenkt werden können. Insgesamt zeichnet sich der erfindungsgemäße Winkelgeber nach dem Flux-Gate Prinzip durch hohe Zuverlässigkeit, relativ hohe Genauigkeit wegen geringen Einflusses von

Umgebungstemperatur und Feuchte sowie aus einer Reihe von Gründen durch eine einfache und kostengünstige Serienfertigung aus. Weitere Vorteile ergeben sich im Zusammenhang mit den folgenden Weiterbildungen des Winkelgebers:

Dadurch, daß der Ringkern mit den Sensorspulen sowie der drehbare Magnet in einem gegenüber dem Erdmagnetfeld im wesentlichen abgeschirmten Raum untergebracht ist, hängen die von den Sensorspulen erzeugten Signalspannungen praktisch nur von der Stellung des drehbaren Magneten ab. Verfälschende Einflüsse des Erdmagnetfelds, die insbesondere bei Fahrzeugen mit solchen Winkelgebern stören können, sind ohne aufwendige Kompensationsmaßnahmen vermieden.

Besonders vorteilhaft sind der drehbare Magnet einerseits und der Ringkern mit seinen Spulen sowie zumindest einem Teil der mit den Spulen in Verbindung stehenden Elektronik in getrennten Räumen untergebracht. Der Innenraum, in dem der Ringkern mit seinen Spulen und die Elektronik angeordnet sind, kann dadurch völlig geschlossen gestaltet werden, ohne aufwendige Durchführungen für eine den drehbaren Magneten bewegende Welle vorzusehen. Die in dem Innenraum untergebrachten Elemente sind somit gegen Umwelteinflüsse wie Temperatur, Feuchtigkeit und Gase weitgehend geschützt.

Wie erwähnt, ist zur Steuerung des Ringkerns nicht unbedingt ein als Dauermagnet ausgebildeter Ringkern erforderlich, vielmehr kann der drehbare Magnet verschiedene Gestaltungen aufweisen. Der drehbare Magnet kann daher insbesondere unter Fertigungsgesichtspunkten günstig ausgebildet sein, speziell als einfacher Stabmagnet gemäß Anspruch 4.

Wegen der relativ hohen nutzbaren Empfindlichkeit des Ringkerns mit den Sensorspulen kann in besonders geeigneter Ausführung der drehbare Magnet im wesentlichen aus einer Kunststoffscheibe bestehen, in welche dauermagnetisierte Körper eingebettet sind. Die dauermagnetisierten Körper sind somit gegen viele Umgebungseinflüsse zuverlässig abgeschlossen, ohne daß es hierzu der Unterbringung des drehbaren Magneten in einem dicht geschlossenen Gehäuseteil bedarf.

Die Erfindung wird im folgenden anhand einer Zeichnung mit vier Figuren erläutert. Es zeigen:

Figur 1 einen mit einer Windfahne verbundenen Winkelgeber in einem Schnitt durch das den Winkelgeber beherbergende Gehäuse;

Figur 2a, 2b eine Draufsicht auf und einen Schnitt durch den drehbaren Magneten;

Figur 3 eine schematisierte Darstellung des Ringkerns mit den auf ihn gewickelten Spulen und

Figur 4 ein Prinzipschaltbild der zur Erregung des Ringkerns und zur Verarbeitung der in den Sensorspulen induzierten Signalspannungen vorgesehenen Elektronik.

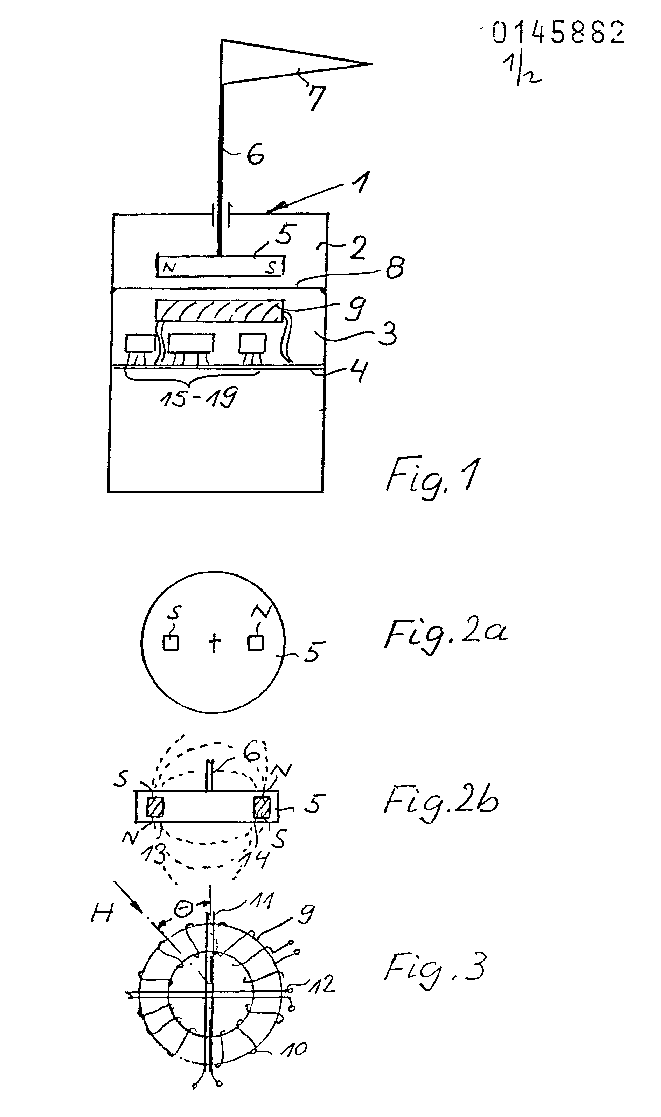

In Figur 1 ist mit 1 ein Gehäuse bezeichnet, welches in zwei Innenräume 2 und 3 unterteilt ist. Das gesamte Gehäuse besteht vorzugsweise aus magnetisch abschirmendem Material, zumindest sind der obere Innenraum 2 und der untere Innenraum 3 oberhalb einer Platine 4 abgeschirmt.

In dem oberen Innenraum 2 ist ein Magnet 5 drehbar. Der drehbare Magnet steht über eine Welle 6, die durch den Deckel des Gehäuses durchgeführt ist, mit einer Windfahne 7 in Verbindung.

Eine Wand aus magnetisch durchlässigem Material trennt dicht den oberen Innenraum von dem unteren Innenraum 3. In letzterem Innenraum ist ein Ringkern einer Flux-Gate Anordnung so angeordnet, daß die Ringkernebene und die Ebene, in der sich der Magnet 5 dreht, zueinander parallel liegen.

Die Ausbildung des drehbaren Magneten ergibt sich aus den Figuren 2a und 2b: Der Magnet 5 besteht im wesentlichen aus einer Kunststoffscheibe, in der symmetrisch zu der Scheibenmitte zwei dauermagnetisierte Körper 13 und 14 eingebettet sind, und zwar so daß die dauermagnetisierten Körper der umgebenden Atmosphäre nicht ausgesetzt sind. Die Magnetisierung der Körper 13, 14 ergibt sich aus dem angedeuteten Feldlinienverlauf in Figur 2b.

Der schematisierte Aufbau des Flux-Gate Ringkerns ist in Figur 3 angedeutet. Der Ringkern 9 ist mit einer Erregerspule 10 umwickelt. Sensorspulen 11 und 12 sind rechtwinklig zueinander über beide gegenüberliegende Ringkernabschnitte gewickelt, damit in diesen Spulen dem Kosinus und dem Sinus des Einfallswinkels der magnetischen Hauptfeldrichtung entsprechende Signale induziert werden. Dieser Winkel wird mit $\theta$ bezeichnet.

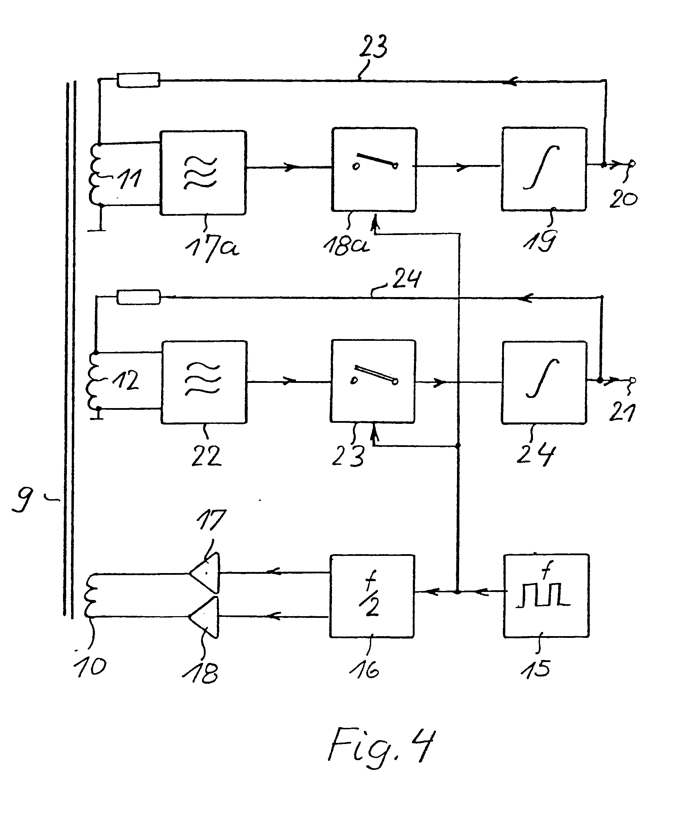

Die Elektronik zur Auswertung der in den Sensorspulen 11, 12 induzierten Signale und zur Erzeugung des in die Erregerspule 10 eingespeisten Stroms ist auf der Platine 4 in dem unteren Innenraum 3 angeordnet. Ein Prinzipschaltbild dieser Elektronik zeigt Figur 4:

In Figur 4 ist der Ringkern 9 der Flux-Gate Anordnung linear symbolisiert. Die Erregerspule 10 wird mit einem Strom der Frequenz $\frac{f}{2}$ gespeist. Hierzu erzeugt ein Taktgenerator 15 ein rechteckförmiges Signal der Frequenz f, die in einem Frequenzteiler 16 unterteilt wird. Aus dem Signal der Frequenz $\frac{f}{2}$ wird mittels Verstärkern 17, 18 der rechteckförmige Erregerstrom gebildet, der die Erregerspule 10 durchfließt.

An jede der Sensorspulen 11, 12 ist eine gleichartige Elektronik zur Auswertung des in der Sensorspule induzierten Signals vorgesehen:

So ist die Sensorspule 11 an einen Bandpass 17 angeschlossen, der die zweite Harmonische der in der Sensorspule induzierten Spannung ausfiltert. Die zweite Harmonische wird mit einem phasengesteuerten Schalter 18 detektiert, dessen Steuersignal mit der Frequenz f dem Taktgenerator entnommen wird. Nach der Detektierung der zweiten Harmonischen erfolgt eine Integration in einem Integrator 19, der somit ein Gleichspannungssignal an einer Klemme 20 liefert, welches dem Sinus des Einfallwinkels θ, d.h. der Stellung des drehbaren Magneten 5 proportional ist.

In analoger Weise steht ein Gleichspannungssignal an der Klemme 21 an, welches dem Kosinus des Einfallswinkels θ proportional ist. Hierzu dienen ein Bandpass 22, ein phasengesteuerter Detektor 23 und ein Integrator 24.

Von jeder der Klemmen 20, 21 führt ein Gegenkopplungszweig 23, 24 zu der zugehörigen Sensorspule 11 bzw. 12 zurück. Die Gegenkopplungszweige dienen dazu, unerwünschte Nichtlinearitäten dieser Flux-Gate Anordnung herabzusetzen. Die Empfindlichkeit der Flux-Gate Anordnung wird dadurch zugleich stabilisiert.

Die Auswertung der Signalspannungen an den Klemmen 20 und 21 kann in herkömmlicher Weise und kompatibel zu einem Winkelgeber mit Hall-Elementen erfolgen, indem diese Spannungssignale beispielsweise einem Quotientenmeßwerk zugeführt werden, welches eine der Stellung der Windfahne 7 proportionale Stellung einnimmt. Diese Stellung ist praktisch unabhängig von Richtung und Stärke des Erdmagnetfelds.

0145882

Patentansprüche

1. Berührungsloser elektronischer Winkelgeber eines
   mechanischen Stellglieds, insbesondere einer Windfahne,
   mit einem proportional zu dem zu messenden Winkel drehbaren Magneten sowie mit zwei rechtwinklig zueinander
   versetzten Sensorelementen, die durch ein von dem drehbaren Magneten erzeugtes Magnetfeld zur Erzeugung je
   eines elektrischen Signals beeinflußbar sind, von denen
   jedes Signal ein Maß für eine von zwei rechtwinklig zueinander orientierten Feldkomponenten ist,
   d a d u r c h   g e k e n n z e i c h n e t ,
   daß als jedes der beiden Sensorelemente wenigstens eine
   Sensorspule (11, 12) auf einem für alle Sensorspulen gemeinsamen Ringkern (9) eines nach dem Fluxgate-Prinzip
   ausgebildeten Magnetfelddetektors vorgesehen ist.

2. Winkelgeber nach Anspruch 1,
   d a d u r c h   g e k e n n z e i c h n e t ,
   daß der Ringkern (9) mit den Sensorspulen (11, 12) sowie
   der drehbare Magnet(5) in einem gegenüber dem Erdmagnetfeld im wesentlichen abgeschirmten Raum (Gehäuse 1) untergebracht sind.

3. Winkelgeber nach Anspruch 2,
   d a d u r c h   g e k e n n z e i c h n e t ,
   daß der drehbare Magnet (5) außerhalb eines geschlossenen
   Innenraums (3) angeordnet ist, in dem der Ringkern (9)
   sowie zumindest Teile einer mit den Sensorspulen zur
   Auswertung der induzierten Signale sowie eine Erregerspule
   auf dem Ringkern speisenden Elektronik (15-19) untergebracht sind.

0145882

4. Winkelgeber nach einem der Ansprüche 1-3,
   d a d u r c h   g e k e n n z e i c h n e t ,
   daß als drehbarer Magnet ein mit einer Drehachse verbundener Stabmagnet dient.

5. Winkelgeber nach einem der Ansprüche 1-4,
   d a d u r c h   g e k e n n z e i c h n e t ,
   daß der drehbare Magnet (5) im wesentlichen aus einer
   Kunststoffscheibe besteht, in die dauermagnetisierte
   Körper (13, 14) eingebettet sind.

0145882
1/2

Fig.1

Fig.2a

Fig.2b

Fig.3

0145882

Fig. 4